# EUROPEAN PATENT APPLICATION

(11) **EP 1 508 854 A2**
(43) Date of publication of application: **23.02.2005**
(21) Application number: 04103836.5
(22) Date of filing: 09.08.2004
(51) Int. Cl.: G06F 9/445

(54) **Driver installation and peripheral device**

(30) Priority: 16.08.2003 KR 2003056720
(71) Applicant: Samsung Electronics Co., Ltd., Suwon-si, Gyeonggi-Do 442-742 (KR)
(72) Inventor: Choi, Jun-young, Yeongtong-gu, Suwon-si, Gyeonggi-do (KR); Oh, Young-dal, Yeongtong-dong,Yeongtong-gu Gyeonggi-do, (KR)
(74) Representative: Read, Matthew Charles

(57) **Abstract**

There are provided an automatic driver installation method and apparatus and a computer readable recording medium for storing a computer program. The automatic driver installation method includes: (a) determining whether the device is connected to the host; (b) fetching device identification information specifically representing the connected device from the device if it is determined that the device is connected to the host; (c) extracting location information comprised of at least one location in which the driver exists, from the device identification information if no driver adapted to drive the connected device has been installed in the host; and (d) fetching the driver from a corresponding location among at least one location indicated by the extracted location information, and installing the driver in the host.

## Description

The present invention relates to a method of installing a device driver comprising detecting connection of a device to a host, reading device driver location information from said device and retrieving a device driver for said device from the location specified by said location information and a peripheral device including memory means that can be read from a host to which the peripheral device is connected, the memory means storing driver location information specifying a location from which a driver for the device can be obtained.

Drivers are programs that provide an interface between an operating system IO subsystem and particular hardware devices.

In the case of operating systems, such as various Microsoft Windows operating systems, that use user space drivers, new drivers are installed from media provided by the user. The user is often prompted to provide the medium by the operating system when it detects new hardware.

This need for manual intervention is problematic for unsophisticated users, particularly as they may be required to specify the path to the driver or an installation program on the medium.

Recently, in the case of the Windows XP operating system, it has become possible to install certain drivers, that are included in the operating system, automatically. However, this does not account for newly developed drivers. Thus, it is impossible to automatically install a driver newly developed by a manufacturing company of a device.

To solve these problems, a driver installation method, disclosed in KR-A-2001-22457, involves a host downloading a driver over the Internet using a URL (Uniform Resource Locator) address read from the hardware device for which the driver is required. However, in this case, the driver must be obtained from the Internet.

A method, according to the present invention, is characterised in that said location is in a local filesystem.

Preferably, the location information identifies a location in a storage device which is external to the host and/or the location information identifies a location in an internal storage device of the host. It may also include a location on a network.

Preferably, attempts are made to retrieve the driver from a plurality of locations in turn until the driver has been retrieved or all attempts have failed.

According to the present invention, there is provided a signal representing program codes for controlling a host to perform a method according to the present invention. The signal may be provided in the form of a data carrier having a recording of the signal.

A peripheral device, according to the present invention, is characterised in that the driver location information specifies a location in a local filesystem.

The device may be configured for external connection to a host, e.g. by USB or Firewire or internal installation in a host, e.g. by PCI, PCMCIA or AGP.

Additional preferred and optional features of the invention are set forth in claims 11 to 23 appended hereto.

Embodiments of the present invention will now be described, by way of example, with reference to the accompanying drawings, in which:
Figure 1 is a flowchart illustrating a first automatic driver installation method according to the present invention;
Figure 2 is a flowchart illustrating step 18 of Figure 1;
Figure 3 is a flowchart illustrating a second automatic driver installation method according to the present invention;
Figure 4 is a block diagram of a first automatic driver installation apparatus according to the present invention;
Figure 5 is a block diagram of a second automatic driver installation apparatus according to the present invention; and
Figures 6a to 6h are views for illustrating the automatic driver installation method and apparatus a third embodiment of the present invention.

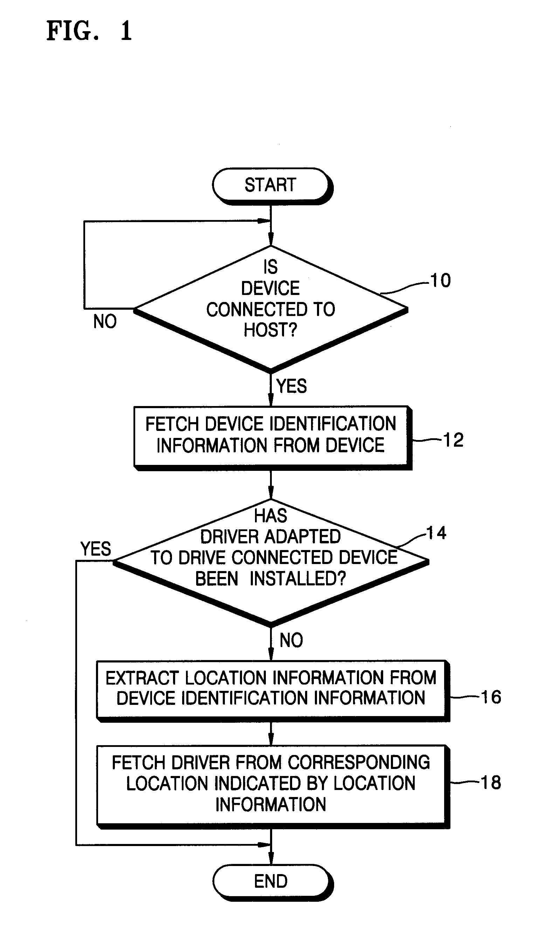

Referring to Figure 1, a first automatic driver installation method comprises steps 10 through 18 of automatically installing a driver (not shown) on a host (not shown) using location information extracted from driver identification information when a device (not shown) is connected to the host.

The first automatic driver installation method automatically installs a driver for driving a device on a host such as a personal computer as follows.

The automatic driver installation method of Figure 1 determines whether a new device has been connected to the host (step 10). Here, the device may be a peripheral device such as a printer or a scanner attached externally or an internal device such as a sound card installed inside the host.

If it is determined that no new device has been connected to the host, step 10 is performed again.

If, however, it is determined that new device has been connected to the host, device identification information is fetched from the device (step 12). That is, after a device is connected to a host by a cable connected to a parallel port of the host or a universal serial bus (USB) port and power has been supplied to the host and the device, the host retrieves identification information from the newly connected device.

After step 12, it is determined whether a driver for the newly connected device has already been installed on the host (step 14). If it is determined that a suitable driver has already been installed, the automatic driver installation method shown in Figure 1 is terminated. However, if no suitable driver has already been installed on the host, the host extracts location information, such as information specifying at least one location in which a suitable driver can be found, from the device identification information (step 16). The extracted location information and the device identification information may have the same data format, that is key-value pairs. Also, the extracted location information can include a network location, e.g. a URL, at which a driver exists, an external location outside the host or an internal location inside the host. In addition, the extracted location information can include identifiers URL, EM and IM according to locations and the number n of locations. Here, URL indicates that a driver is located on the Internet, EM indicates that a driver is located in an external storage unit, such as an external hard disk or a USB memory device, and IM indicates that the driver is located in an internal storage unit installed in the host, such as a CD-ROM.

By way of example, the format of device identification information defined in the IEEE1284 standard is as follows. First and second bytes of the device identification information represent the length of the device identification character string. Key-value pairs follow the second byte. The key-value pairs are separated by semicolons ";" and the keys are separated from the associated values by colons ":". Plural values, associated with the same key, are separated by commas ",". Currently used keys for device identification information include MFG (or, Manufacturer) indicating the name of the manufacturer of the device, CMD indicating the command name used in the device, MODEL (or, MDL) indicating the model name of the device, CLASS indicating the product group of the device (printer or monitor, etc.) and DES indicating a description of the device. The structure of the device identification information is listed in table 1 below.

**[Table 1]**

| Byte of device identification information | Bit number | Key name | Description | Remarks |
|---|---|---|---|---|
| 0 | 0-7 | - | Lower byte of length of device identification information (LOWER) | |
| 1 | 8-15 | - | Upper byte of length of device identification information (UPPER) | |
| 2-N | 16-n1 | MFG | Device manufacturer's name | n1-(16-1): length of character string of MFG |
| | n1+1-n2 | CMD | Command name | n2-n1: length of character string of CMD |
| | n2+1-n3 | MDL | Model name | n3-n2: length of character string of MDL |
| | n3+1 -n4 | CLASS | Class name | n4-n3: length of character string of CLASS |
| | n4+1-n5 | DES | Model description | n5-n4: length of character string of DES |
| | n5+1-n6 | DRVSRC | n: number of locations | n6-n5: length of character string ofn |
| | n6+1-n7 | | URL: URL address information | n7-n6: length of character string of URL information |
| | n7+1-n8 | | EM: location information of external storage unit | n8-n7: length of character string of EM information |
| | n8+1-n9 | | IM: location information of internal storage unit | n9-n8: length of character string of IM information |
| | n9+1-n10 | | ... : other media location information | n 10-n9: length of other media information |

The location information "DRVSRC" which is extracted from the device identification information and has a key-value data format can be for example:
DRVSRC: 3,URL= http://www.sec.co. kr/product/printer/download/mjc27 00.exe, EM="EXTMEDIA_LABEL" \ SETUP.EXE, IM="INTMEDIA_LABEL" \ SETUP.EXE.

The numeral '3' indicates that there are three locations at which the required driver can be found. In the location information,
http://www.sec.co.kr/product/printer/download/mjc2700.exe is the URL of a copy of the driver. Alternatively, the location information may comprise the URL of a program, e.g. a CGI program or a servlet, with a query string, identifying the device, appended thereto. EXTMEDIA_LABEL is the label of an external storage unit and SETUP.EXE is the name of driver installation program stored on the external storage unit. INTMEDIA_LABEL is the label of the internal storage unit and SETUP.EXE is the name of driver installation program stored on the internal storage unit.

After step 16 in step 18, the host retrieves and installs the driver from one of the locations, i.e. Internet, external or internal, specified by the extracted location information.

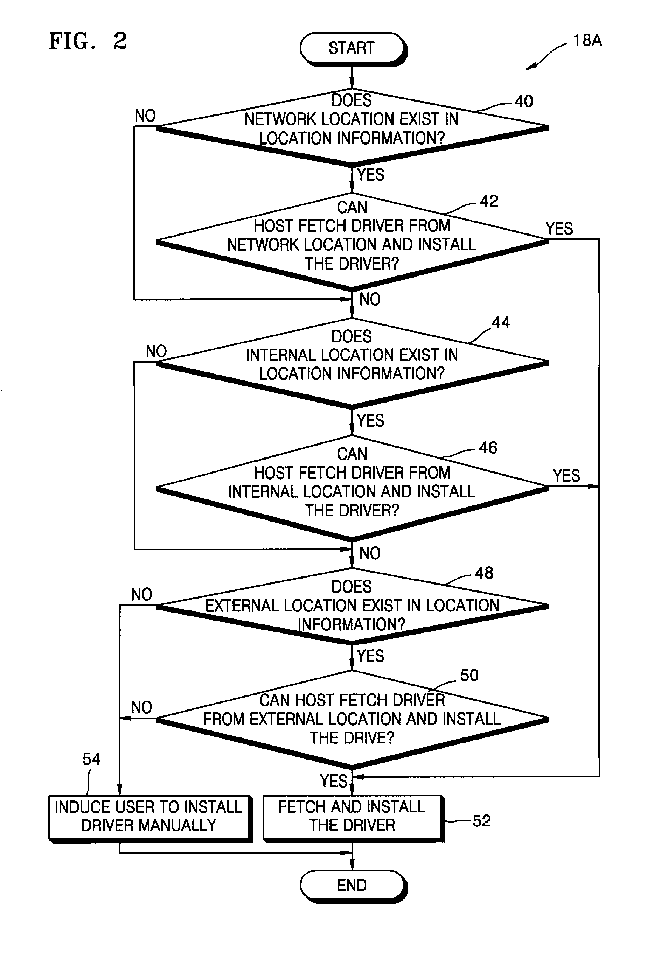

Referring to Figure 2, step 18, shown in Figure 1, comprises steps 40 through 54 of checking locations included in the location information one by one, fetching the driver from a one of the locations and installing the driver.

In step 40, it is determined whether the extracted location information includes a network location on the Internet. If it is determined that a network location exists in the extracted location information, in step 42, it is determined whether the host can access the network location, fetch the driver from the location and install the driver. If it is determined in step 40 that a network location does not exist in the location information or, in step 42, that the host cannot access the network location or that the host can access the location on the network but cannot retrieve the driver from the location and install the driver, it is determined in step 44 whether an internal location exists in the extracted location information.

If it is determined that an internal location exists in the extracted location information, it is determined in step 46 whether the host can fetch a driver from the internal location and install the driver. If it is determined in step 44 that an internal location does not exist in the location information or, in step 46, that the host cannot retrieve and install the driver from the internal location, it is determined in step 48 whether an external location exists in the extracted location information.

If it is determined in step 48 that an external location exists in the extracted location information, it is determined in step 50 whether the host can retrieve and install the driver from the external location.

If it is determined in step 42, 46, or 50 that the host can access the location on the network, the internal location or the external location and retrieve and install the driver from the location, in step 52, the host accesses the location on the network, the internal location or the external location and retrieves and installs a driver from one of the locations.

If it is determined in step 48 that an external location does not exist in the extracted location information or, in step 50, that the host cannot access the external location and retrieve and install the driver from the external location, in step 54, the host prompts the user to do a manual installation of the driver. That is, the host requires a user to manually install the driver.

In the above-described step 18A shown in Figure 2, the network location among the three locations from which the driver may be retrieved is checked first, the internal location is checked second and the external location is checked last. However, the three locations can be checked in different orders in other embodiments. For example, the internal location may be checked first, the external location may be checked second, and the location on the network may be checked last.
Alternatively, it is possible that the external location is checked first, the location on the network is checked second, and the internal location is checked last.

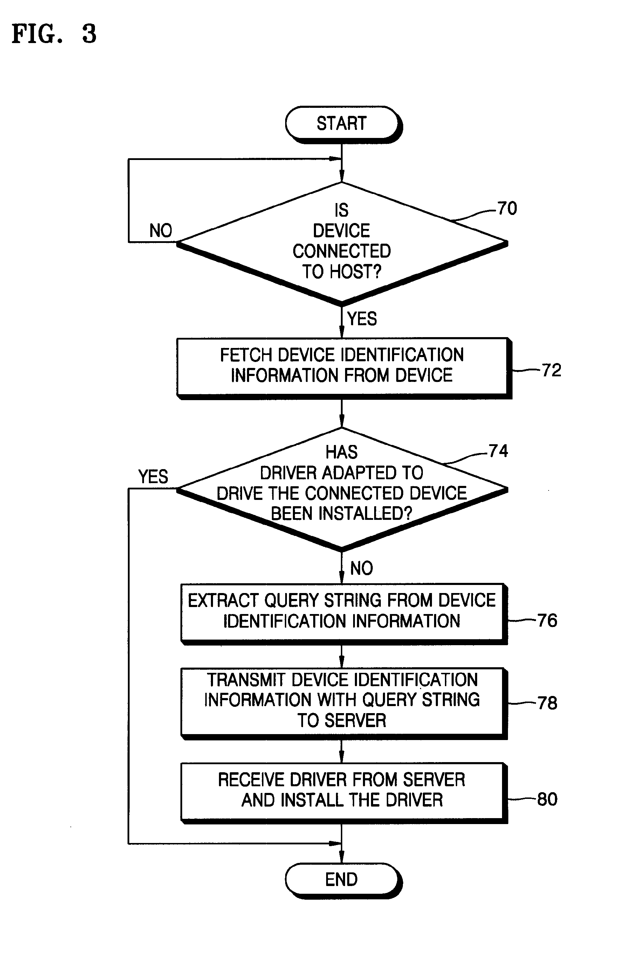

Referring to Figure 3, in another embodiment of the present invention, the automatic driver installation method comprises steps 70 through 80 of automatically installing a driver using a query string extracted from device identification information when a device is connected to the host.

In step 70 of this embodiment, it is determined whether a device has been newly connected to the host. If it is determined that no new device has been connected to the host, step 70 is performed again.

If it is determined that a device is connected to the host, in step 72, the host retrieves device identification information specifically relating to the device connected to the host, from the device. After step 72, it is determined in step 74 whether a driver for the newly connected device has already been installed on the host. If it is determined that a suitable driver has been installed on the host, the automatic driver installation method shown in Figure 3 is terminated. However, if it is determined that no suitable driver has already been installed on the host, in step 76, a query string is extracted from the device identification information obtained from the device. The query string contains contents requesting a driver providing server to provide a driver via a network.

After step 76, in step 78, the host transmits the device identification information with the extracted query string to the server that provides the driver. The device identification information transmitted to the server can be limited to a model name, or related identification information, of the device.

After step 78, the server, which received the query string and the device identification information, finds the required driver using the query string and the device identification information. The server sends the driver to the host, and the host receives the driver and installs the driver thereon at step 80.

The above-described automatic driver installation method shown in Figure 1 or 3 can be performed by the operating system (OS) of the host.

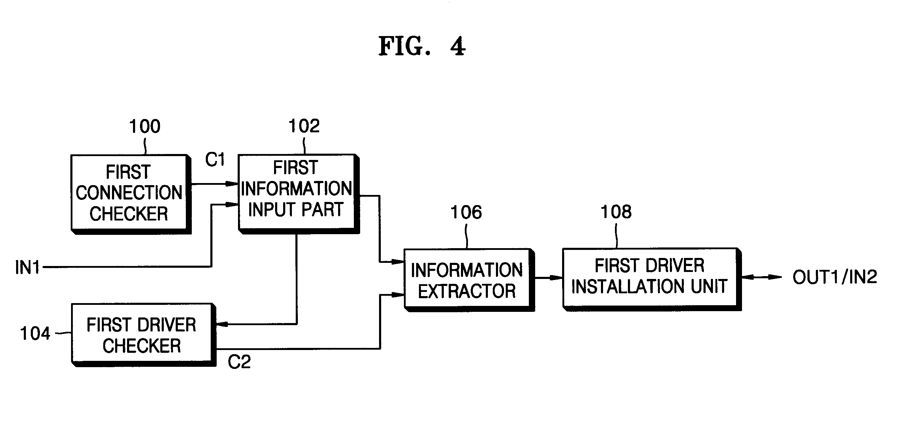

Referring to Figure 4, an automatic driver installation apparatus, according to the present invention, comprises a first connection checker 100, a first information input part 102, a first driver checker 104, an information extractor 106 and a first driver installation unit 108.

The automatic driver installation apparatus shown in Figure 4 performs the automatic driver installation method shown in Figure 1.

To perform step 10 shown in Figure 1, the first connection checker 100 checks whether a device has been newly connected to the host and outputs the checking result as a first control signal C1 to the first information input part 102.

To perform step 12, the first information input part 102 receives device identification information specifically representing the connected device from the device through an input terminal IN1, in response to the first control signal C1. For example, if it is recognized through the first control signal C1 that a device is connected to the host, the first information input part 102 receives device identification information from the connected device through an input terminal IN 1.

To perform step 14, after the first information input part 102 receives the device identification information completely, the first driver checker 104 checks whether a driver adapted to drive the device connected to the host has been installed in the host and outputs the checked result as a second control signal C2 to the information extractor 106.

To perform step 16, if it is recognized through the second control signal C2 received from the first driver checker 104 that no driver adapted to drive the device connected to the host has been installed in the host, the information extractor 106 extracts location information for at least one location in which a driver exists, from the device identification information received from the first information input part 102, and outputs the extracted location information to the first driver installation unit 108.

To perform step 18, the first driver installation unit 108 retrieves a driver from a corresponding location among at least one location indicated by the extracted location information received from the information extractor 106, and installs the driver in the host. To achieve this, the first driver installation unit 108 requires a driver existing at a network location, an internal location inside the host, or an external location outside the host through an output terminal OUT1, and receives a driver existing at a network location, an internal location inside the host, or an external location outside the host through an input terminal IN2. That is, the first driver installation unit 108 shown in Figure 4 performs step 18A shown in Figure 2.

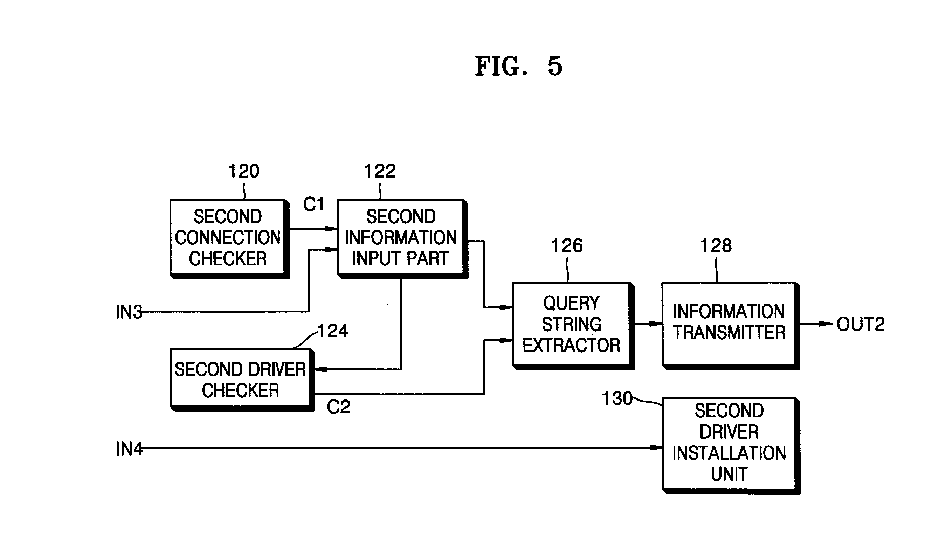

Referring to Figure 5, another automatic driver installation apparatus, according to the present invention, comprises a second connection checker 120, a second information input part 122, a second driver checker 124, a query string extractor 126, an information transmitter 128, and a second driver installation unit 130.

The automatic driver installation apparatus shown in Figure 5 performs the automatic driver installation method shown in Figure 3.

To perform step 70 shown in Figure 3, the second connection checker 120 checks whether a device is connected to the host, and outputs the checked result as a first control signal C1 to the second information input part 122.

To perform step 72, the second information input part 122 receives device identification information specifically representing the connected device from the device through an input terminal IN3, in response to the first control signal C1 received from the second checker 120. For example, if it is recognized through the first control signal C1 that a device is connected to the host, the second information input part 122 receives device identification information from the device through the input terminal IN3.

To perform step 74, after the second information input part 122 receives the device identification information completely, the second driver checker 124 checks whether a driver adapted to drive the device connected to the host has been installed in the host, and outputs the checked result as a second control signal C2 to the query string extractor 126.

To perform step 76, if it is recognized through the second control signal C2 received from the second driver checker 124 that no driver adapted to drive the device connected to the host has been installed in the host, the query string extractor 126 extracts a query string from the device identification information received from the second information input part 122 and outputs the extracted query string to the information transmitter 128.

To perform step 78, the information transmitter 128 transmits the device identification information with the query string to a server (not shown) that provides a driver through an output terminal OUT2.

To perform step 80, the second driver installation unit 130 receives a driver from the server through an input terminal IN4 and installs the driver in the host. To achieve this, the server finds a driver adapted to drive the device using the device identification information and the query string transmitted from the information transmitter 128 and outputs the found driver to the second driver installation unit 130.

The automatic driver installation apparatus shown in Figure 4 or 5 can be installed in the host to which a device is connected.

A computer readable recording medium stores at least one computer program, i.e. a recording of a signal representing such a program, which automatically installs a driver adapted to drive a device in a host, comprises a first set of instructions adapted to determine whether a device is connected to the host; a second set of instructions adapted to fetch device identification information from the device that specifically represents the connected device if the device is connected to the host; a third set of instructions adapted to extract location information being information for a location in which a driver exists from the device identification information if no driver adapted to drive the connected device has been installed in the host; and a fourth set of instructions adapted to fetch a driver from a location indicated by the extracted location information and install the driver in the host.

A computer readable recording medium may alteratively store at least one computer program which automatically installs a driver adapted to drive a device in a host, comprises a first set of instructions adapted to determine whether a device is connected to the host; a second set of instructions adapted to fetch device identification information from the device that specifically represents the connected device if the device is connected to the host; a third set of instructions adapted to extract a query string from the device identification information if no driver adapted to drive the connected device has been installed in the host; a fourth set of instructions adapted to transmit the device identification information with the query string to a server that provides a driver; and a fifth set of instructions adapted to receive a driver adapted to drive the device from a server that finds the driver using the query string and the device identification information, and install the driver in the host.

As described above, in a case where automatic driver installation according to an embodiment of the present invention is performed by a program, it is possible to automatically install a driver even though an operating system of a host cannot perform the automatic driver installation method shown in Figure 1 or 3, since a program for automatic driver installation is provided to a user over the Internet or through an external memory, or through any other suitable method.

Hereinafter, the automatic driver installation method shown in Figure 1 and the automatic driver installation apparatus shown in Figure 4, according to an embodiment of the present invention, are described with reference to user interface screens as follows.

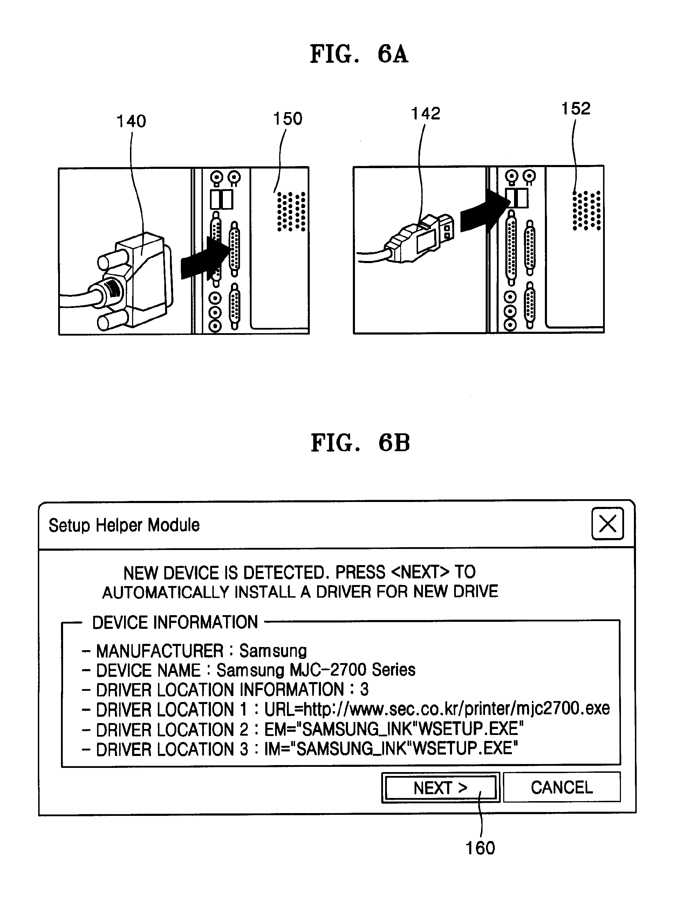

Referring to Figure 6a, in a case where a device, for example, a peripheral device is connected to a host 150 or 152 through a cable 140 or 142, the first connection checker 100 which performs step 10 senses the connection and generates a first control signal C1 so that the first information input part 102 which performs step 12 receives device identification information from the device through the input terminal IN1. At this time, the first driver checker 104 that performs step 14 checks whether a driver adapted to drive the device connected to the host 150 or 152 through the cable 140 or 142 has been installed in the host 150 or 152.

If it is determined that no driver adapted to drive the device has been installed in the host 150 or 152, the information extractor 106 that performs step 16 extracts location information DRVSRC from the device identification information received from the first information input part 102.

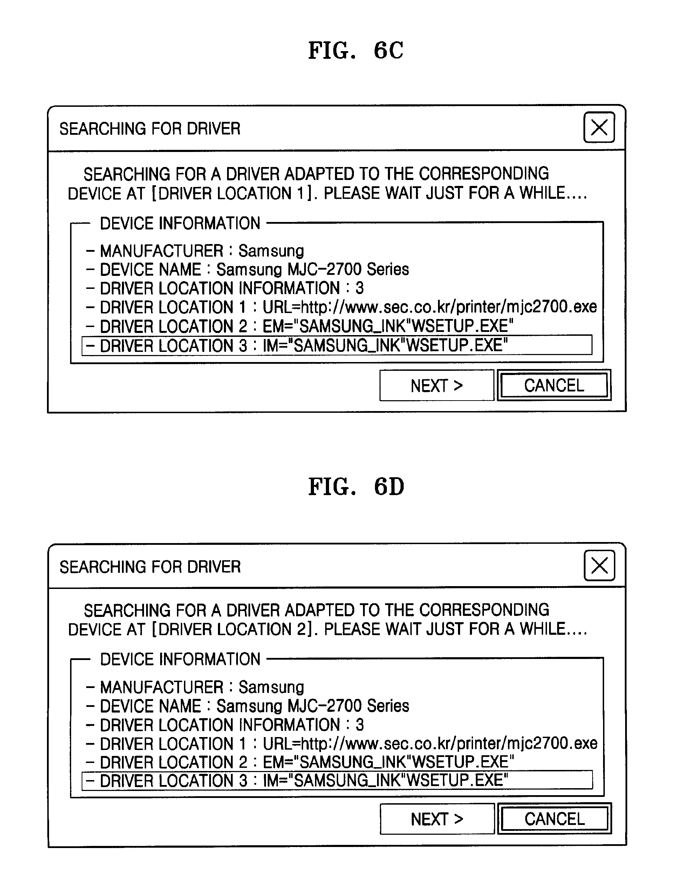

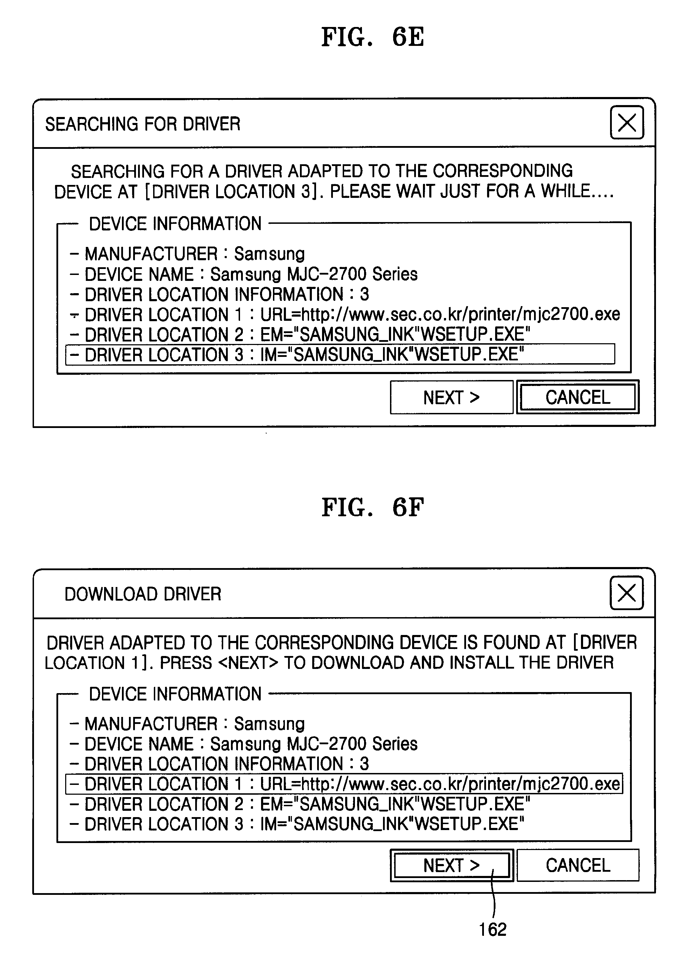

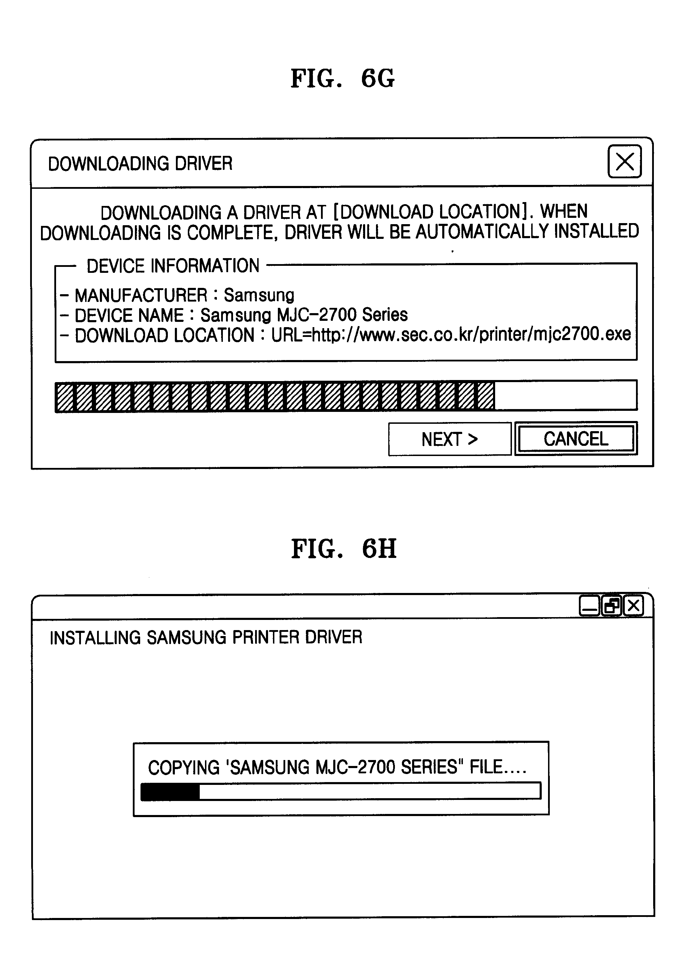

The first driver installation unit 108 that performs step 18 installs a driver using the extracted location information. In more detail, first, the driver installation unit 108 shows a user interface screen as shown in Figure 6b to a user. If the user selects NEXT 160 shown in Figure 6b, a screen shown in Figure 6c is displayed to the user. If no driver is found in a first location among driver locations, the automatic driver installation method according to an embodiment of the present invention tries to find a driver in a different location using the method shown in Figure 2. That is, if no driver is found in a first location, the first driver installation unit 108 tries to find a driver in the location 2 and shows a screen shown in Figure 6d to the user. Also, if no driver is found in the second location, the first driver installation unit 108 tries to find a driver in a third location and shows a screen shown in Figure 6e to the user. If a driver is found in the first location, the first driver installation unit 108 shows a screen shown in Figure 6f to the user. If the user selects NEXT 162 on the screen shown in Figure 6f, the first driver installation unit 108 receives and downloads the driver through an input terminal IN2 and shows a screen shown in Figure 6g to the user. The first driver installation unit 108 automatically installs the completely downloaded driver. If the device is a printer, a screen shown in Figure 6h can be shown to the user when the driver is installed.

As described above, in the automatic driver installation methods and apparatuses and the computer readable recording medium for storing the computer program of the present invention, a driver adapted to drive a device is automatically installed in a host when the device is connected to the host. Therefore, a user does not need to manually install a driver for driving a device. That is, the user does not need to search for the location of a driver capable of driving the device. Also, in a case where the driver is provided through a network, manufacturers of devices do not need to provide separate media for storing the driver to users, thereby reducing driver development cost and service cost. In addition, when manufacturers of devices try to update a driver, it is possible to provide an updated driver directly to users in real time, since the manufacturers can merely change a driver provided on the manufacturer's home page over the Internet into an updated driver, thereby reducing manufacturing cost, maintenance cost, and repair cost. Also, since the host receives and reads the location information as well as the device identification information, a separate protocol for reading the location information from the device is unnecessary. That is, since the location information with the same format as the format of the device identification information to be read for identifying a device by host is created and is included in the device identification information, a separate tool allowing the host to identify the location information is unnecessary.

## Claims

1. A method of installing a device driver comprising detecting connection of a device to a host, reading device driver location information from said device and retrieving a device driver for said device from the location specified by said location information, **characterised in that** said location is in a local filesystem.

2. A method according to claim 1, wherein the location information identifies a location in a storage device which is external to the host.

3. A method according to claim 1, wherein the location information identifies a location in an internal storage device of the host.

4. A method according to claim 1, 2 or 3, wherein the location information specifies a plurality of locations.

5. A method according to claim 4, wherein attempts are made to retrieve the driver from said locations in turn until the driver has been retrieved or all attempts have failed.

6. A signal representing program codes for controlling a host to perform a method according to any preceding claim.

7. A data carrier having a signal according to claim 6 recorded thereon.

8. A peripheral device including memory means that can be read from a host to which the peripheral device is connected, the memory means storing driver location information specifying a location from which a driver for the device can be obtained, **characterised in that** the driver location information specifies a location in a local filesystem.

9. A peripheral device according to claim 8, configured for external connection to a host, e.g. by USB or Firewire.

10. A peripheral device according to claim 9, configured for internal installation in a host, e.g. by PCI, PCMCIA or AGP.

11. A method for automatically installing a driver which drives a device in a host, the method comprising:
(a) determining whether the device is connected to the host;
(b) fetching device identification information from the device if it is determined that the device is connected to the host, wherein said device identification information specifically represents the connected device;
(c) extracting location information comprising at least one location in which the driver exists, from the device identification information if no driver adapted to drive the connected device has been installed in the host; and
(d) fetching the driver from a corresponding location among at least one location indicated by the extracted location information, and installing the driver in the host.

12. The method of claim 11, wherein the location information and the device identification information have a format of key data.

13. The method of claim 11, wherein the location information extracted in step (c) includes at least one among a network location, an internal location inside the host, and an external location outside the host.

14. The method of claim 13, wherein the location information extracted in step (c) includes the number of locations.

15. The method of claim 13, wherein step (d) comprises
determining whether the network location exists in the extracted location information;
determining whether the host can access the network location and can fetch and install the driver if it is determined that the network location exists;
determining whether the internal location exists in the extracted location information if it is determined that the network location does not exist in the location information or that the host cannot access the network location, fetch and install the driver;
determining whether the host can fetch the driver from the internal location and install the driver therein if it is determined that the internal location exists;
determining whether the external location exists in the extracted location information if it is determined that the internal location does not exist in the location information or that the host cannot fetch the driver from the internal location and install the driver therein;
determining whether the host can fetch the driver from the external location and install the driver therein if it is determined that the external location exists; and
accessing the network location, the internal location, or the external location and fetching and installing the driver if it is determined that the host can access the network location, the internal location, or the external location and fetch and install the driver.

16. The method of claim 15, further comprising inducing a user to install the driver manually if it is determined that the external information does not exist in the location information or that the host cannot access the external location and fetch and install the driver.

17. A method for automatically installing a driver that drives a device on a host, the method comprising:
determining whether the device is connected to the host;
fetching device identification information from the device if it is determined that the device is connected to the host, wherein the device identification Information specifically represents the connected device;
extracting a query string from the fetched device identification information if no driver adapted to drive the connected device has been installed in the host;
transmitting the device identification information with the query string to a server that provides the driver; and
receiving the driver from a server that found the driver adapted to drive the device using the query string and the device identification information, and installing the driver in the host.

18. The method of claim 11, being performed by an operating system of the host.

19. The method of claim 11, wherein the device is an external device installed outside the host, or an internal device installed in the host.

20. An automatic driver installation apparatus for installing a driver that drives a device in a host, the automatic driver installation apparatus comprising:
a first connection checker, which checks whether the device is connected to the host and outputs the checked result as a first control signal;
a first information input part, which fetches device identification information specifically representing the connected device from the device, in response to the first control signal;
a first driver checker, which checks whether a driver adapted to drive the connected device has been installed in the host and outputs the checked result as a second control signal;
an information extractor, which extracts location information comprised of at least one location in which the driver exists from the device identification information received from the first information input part, in response to the second control signal; and
a first driver installation unit, which fetches the driver from a corresponding location among the at least one location indicated by the extracted location information received from the information extractor, and installs the driver in the host.

21. An automatic driver installation apparatus for installing a driver that drives a device on a host, the automatic driver installation apparatus comprising:
a second connection checker, which checks whether the device is connected to the host and outputs the checked result as a first control signal;
a second information input part, which fetches device identification information specifically representing the connected device from the device, in response to the first control signal;
a second driver checker, which checks whether a driver adapted to drive the connected device has been installed in the host and outputs the checked result as a second control signal;
a query string extractor, which extracts a query string from the device identification information received from the second information input part, in response to the second control signal;
an information transmitter, which transmits the device identification information with the query string to the server that provides the driver; and
a second driver installation unit, which receives the driver from a sever that finds the driver adapted to drive the device, using the query string and the device identification information, and installs the driver in the host.

22. A computer readable medium of instructions comprising at least one computer program adapted to control a system to install a driver to drive a device in a host, the computer program comprising:
a first set of instructions adapted to control the system to determine whether the device is connected to the host;
a second set of instructions adapted to control the system to fetch device identification information specifically representing the connected device from the device if it is determined that the device is connected to the host;
a third set of instructions adapted to control the system to extract location information comprising a location in which the device exists, from the device identification information if no driver adapted to drive the connected device has been installed in the host; and
a fourth set of instructions adapted to control the system to fetch the driver from the location indicated by the extracted location information and install the driver in the host.

23. A computer readable medium of instructions comprising at least one computer program adapted to control a system to install a driver to drive a device on a host, the computer program comprising:
a first set of instructions adapted to control the system to determine whether the device is connected to the host;
a second set of instructions adapted to control the system to fetch device identification information specifically representing the connected device from the device if it is determined that the device is connected to the host;
a third set of instructions adapted to control the system to extract a query string from the device identification information if no driver adapted to drive the connected device has been installed in the host;
a fourth set of instructions adapted to control the system to transmit the device identification information with the query string to a server which provides the driver; and
a fifth set of instructions adapted to control the system to receive the driver from a sever that find the driver adapted to drive the device using the query string and the device identification information, and install the driver in the host.
